# EUROPÄISCHE PATENTSCHRIFT

(11) **EP 2 033 523 B1**
(45) Veröffentlichungstag und Bekanntmachung des Hinweises auf die Patenterteilung: **18.08.2010**
(21) Anmeldenummer: 07017305.9
(22) Anmeldetag: 04.09.2007
(51) Int. Cl.: A21B 3/13, A21B 3/15

(54) **Backblech**
Baking tray
Plaque de cuisson

(43) Veröffentlichungstag der Anmeldung: 11.03.2009
(73) Patentinhaber: Anneliese Mertes GmbH, 52249 Eschweiler (DE)
(72) Erfinder: Mertes, Thomas, 52249 Eschweiler (DE)
(74) Vertreter: Naeven, Ralf

(56) Entgegenhaltungen:
- ES-A1- 2 213 465
- FR-A- 2 856 117
- GB-A- 2 304 546
- GB-A- 2 381 186
- US-A- 4 455 926

## Beschreibung

Die Erfindung betrifft ein Backblech, umfassend einen Rahmen und ein mit dem Rahmen verbundenes Bodenelement, wobei der Rahmen mindestens ein Auflagestück mit jeweils mindestens zwei Verbindungslöchern aufweist, in denen jeweils der Schaft eines Verbindungselements angeordnet ist, welches das auf dem Auflagestück aufliegende Bodenelement mit dem Auflagestück verbindet und die Verbindungselemente Bolzen mit einem dem Bodenelement abgewandten Bolzenschaft sind.

Backbleche der vorgenannten Art werden von der Anmelderin vertrieben (Prospekt "Anlagenbleche und Baguettebleche" aus dem Jahre 2007). Derartige Backbleche werden in industriellen Backanlagen eingesetzt und weisen eine Größe bis zu 2400 mm x 800 mm auf. Die Backbleche können glatte oder auch gewellte Bodenelemente aufweisen. Die Backbleche mit gewelltem Boden können z. B. als Baguettebleche zur Herstellung von Baguette eingesetzt werden. Der Rahmen besteht aus Edelstahl und das Bodenelement in der Regel aus Aluminium, wobei die das Backgut tragende Oberseite antihaftend, z. b. mit Silikon oder Fluorpolymer (Teflon) beschichtet ist. Die Bodenelemente sind über Nietverbindungen fest mit dem Rahmen verbunden. Dabei kann die Verbindung "schwimmend" ausgeführt sein. D. h., das Bodenelement kann sich relativ zum Rahmen verschieben, um Unterschiede im Ausdehnungskoeffizienten zwischen Rahmen und Bodenelement auszugleichen. Dies kann insbesondere bei flachen Bodenelementen notwendig sein, da die Backbleche hohen Temperaturunterschieden im Bereich von minus 40°C bis 250°C ausgesetzt werden.

Die Antihaftbeschichtung der Backbleche verschleißt nach einigen tausend Backvorgängen. Wenn die Antihaftwirkung nachlässt und das Backprodukt zu kleben beginnt, müssen die Bodenelemente mit einer neuen Antihaftbeschichtung versehen oder ausgetauscht werden. Hierfür sind die Bodenelemente von den Edelstahlrahmen zu entfernen, weshalb die vorhandenen Nietverbindungen ausgebohrt, also zerstört werden müssen. Anschließend wird das neue Bodenelement oder das neu beschichtete Bodenelement auf den Rahmen aufgenietet. Allein das Abnehmen und Aufnieten der der Bodenelemente ist sehr zeitaufwendig und nimmt pro Backblech etwa 45 Minuten in Anspruch. Für die Aufarbeitung von oftmals hunderten von Blechen kann der Zeitaufwand mehrere Wochen betragen. Da der Kunde seine Produktionsanlagen weiter betreiben will, ist er gezwungen, einen zweiten Satz Bleche vorzuhalten oder diesen vom Hersteller zu mieten. Der vollständige Aufarbeitungsprozess wird in der Regel beim Hersteller der Backbleche durchgeführt, wodurch außerdem hohe Transportkosten entstehen.

Ein Backblech der eingangs genannten Art ist zudem aus der US 4,455,926 bekannt. Dort ist es offenbart, das Bodenelement mittels bolzenförmiger Nieten am Rahmen zu fixieren. Gemäß diesem Stand der Technik kann der Rahmen aus geraden Rohrelementen und in jeweils zwei Rohrelementen eingesteckten Eckverbindern bestehen. Die Verbindung zwischen einem der Rohrelemente und dem Eckverbinder wird durch jeweils einen Rahmenniet, der nicht zur Fixierung des Bodenelements dient, gesichert. Die Eckverbinder weisen jeweils zwei Nietenschlitze auf, von denen jeweils einer in dem entsprechenden Rohrelement den Rahmenniet umfasst. Auch hier müssen zum Abnehmen des Bodenelements vom Rahmen zahlreiche Nietverbindungen aufgebrochen werden, was mit einem entsprechend hohen Zeitaufwand verbunden ist.

Es ist nun Aufgabe der vorliegenden Erfindung, ein Backblech der eingangs genannten Art zur Verfügung zu stellen, das eine vereinfachte Demontage und Montage der Bodenelemente am Rahmen ermöglicht.

Bei einem Backblech der eingangs genannten Art wird diese Aufgabe mit den kennzeichnenden Merkmalen des Anspruchs 1 gelöst.

Hiermit ist ein Schnellverschluss realisiert, der es ermöglicht, die Bodenelemente ohne Spezialwerkzeug vor Ort und vom Kunden selbst, d. h. beim Betreiber der Backanlagen, zu demontieren und später zu montieren. Hierdurch wird im Vergleich zur Lösung und Neuerstellung von Nietverbindungen erheblich Zeit eingespart. Zudem brauchen dann lediglich die wesentlich weniger sperrigen und leicht ineinander stapelbaren Bodenelemente zum Hersteller und von dort zurück transportiert zu werden, so dass auch der Transportaufwand deutlich reduziert wird. Bei einem bloßen Ersatz der verbrauchten Bodenelemente durch neue Bodenelemente kann der Austausch auch während der laufenden Produktion erfolgen, so dass der Betreiber der Backanlage keinen oder allenfalls einen kleineren Austauschsatz benötigt.

Das erfindungsgemäße Backblech kann auch so ausgebildet sein, dass das Auflagestück ein rohrförmiges oder im Profil u-förmiges Rahmenstück ist und die mindestens eine Sicherungsschiene von dem mindestens einen Rahmenstück umfasst ist. In diesem Fall befindet sich die Sicherungsschiene innerhalb des Rahmens und ist auf diese Weise vor Verschmutzung oder unabsichtlicher Handhabung geschützt.

Des Weiteren kann das erfindungsgemäße Backblech auch so ausgebildet sein, dass die mindestens eine Sicherungsschiene in Längsrichtung des zugehörigen Rahmenstückes verfahrbar ist.

Durch Verschiebung in Längsrichtung des Rahmenstückes kann die Sicherungsschiene auf diese Weise zwischen der Sicherungsposition, in der die Bolzen gesichert und damit das Bodenelement hinreichend fixiert ist, zu einer Freigabeposition verfahren werden, in der die Bolzen entnommen werden können.

Es kann vorteilhaft sein, das erfindungsgemäße Backblech so auszubilden, dass die mindestens eine Sicherungsschiene im zugehörigen Rahmenstück geführt ist. Die Führung kann dadurch erfolgen, dass die Sicherungsschiene in ihren Außenmaßen den Innenmaßen des zugehörigen Rahmenstückes angepasst und durch diese Innenmaße mit Spiel geführt ist. Bei einem Rahmenstück mit rechteckigem Querschnittsprofil könnte die Sicherungsschiene beispielsweise ebenfalls im Querschnitt rechteckig mit Unterbrechung durch den Sicherungsschlitz ausgebildet sein. Somit könnte die Führung durch sämtliche Innenwände des Rahmenstückes erfolgen. Es ist dabei mit ausreichenden Toleranzen zu arbeiten, um ein Verklemmen der Sicherungsschiene auch bei leichter Verformung des Backblechrahmens zu verhindern. Es kann aber auch vorgesehen sein, im Rohr gesonderte Auflageelemente oder Einprägungen vorzusehen, auf denen die Sicherungsschiene geführt ist.

Zusätzliche Führungen im Rohrstück würden es auch erlauben, als Sicherungsschiene ein Flacheisen oder - im Falle von Rahmenstücken mit kreisförmigen oder in sonstiger Weise rundem Profil - rohrförmige Sicherungsschienen einzusetzen, deren Außendurchmesser deutlich kleiner ist als der Innendurchmesser des entsprechenden Rahmenstückes.

Das erfindungsgemäße Backblech kann auch so ausgebildet sein, dass die Sicherungsschiene zwei den Sicherungsschlitz begrenzende Sicherungszungen aufweist.

Damit wird der Sicherungsschlitz vollständig durch die Sicherungsschiene begrenzt. Der Sicherungsschlitz kann sich dabei bis zu einem vorderen Ende der Sicherungsschiene ununterbrochen durchziehen. Dies hat den Vorteil, dass die Schiene zumindest zum Teil aus Meterware herstellbar ist.

Alternativ könnte die Sicherungsschiene auch mit lediglich einer Sicherungszunge versehen werden. Der Sicherungsschlitz würde dann zum Einen durch die Sicherungszunge und zum Anderen zum Beispiel durch eine Wand des Rahmenstückes begrenzt.

Das erfindungsgemäße Backblech kann auch so ausgebildet sein, dass die lichte Weite des Sicherungsschlitzes im Wesentlichen konstant ist und die Bolzenschäfte jeweils einen vom Bodenelement abgewandten Bolzenschaftendbereich mit einem die lichte Weite des Sicherungsschlitzes übersteigenden Durchmesser aufweisen.

Auf diese Weise wird ein Formschluss zwischen dem Bolzenschaftendbereich und den den Sicherungsschlitz begrenzenden Sicherungszungen bewirkt. Der Sicherungsschlitz kann an seinem vorderen Ende einen Eingangsbereich mit einer zu seinem vorderen Ende hin zunehmenden lichten Weite aufweisen, so dass die Einführung der Bolzenschäfte in den Sicherungsschlitz vereinfacht wird.

Weiterhin kann das erfindungsgemäße Backblech auch so ausgebildet sein, dass die Bolzenschäfte jeweils einen vom Bodenelement abgewandten Bolzenschaftendbereich aufweisen und der Sicherungsschlitz abwechselnd Entnahmebereiche mit einer den Durchmesser des zugehörigen Bolzenschaftendbereichs übersteigenden lichten Weite und Sicherungsbereiche mit einer den Durchmesser des zugehörigen Bolzenschaftendbereichs unterschreitenden lichten Weite aufweist.

Hierdurch ist der Vorteil gegeben, dass zur Freigabe der Bolzen die Sicherungsschiene lediglich soweit verfahren werden muss, bis jeder Entnahmebereich den zugehörigen Bolzenschaft umfasst. Somit ist also der Verfahrweg zwischen Freigabeposition und Sicherungsposition deutlich verringert.

Weiterhin kann das erfindungsgemäße Backblech so ausgebildet sein, dass der Eingriff der mindestens einen Sicherungsschiene in die Bolzenschäfte derart ausgestaltet ist, dass aufgrund des Verfahrens der Sicherungsschiene von der Freigabeposition in die Sicherungsposition die Bolzenköpfe in Richtung auf das Auflagestück hin gezogen werden. Mit diesem auf den Bolzenkopf ausgeübten Zwang wird auch das Bodenelement auf das Auflagenstück gepresst und damit fixiert. Dies ist insbesondere dann sinnvoll, falls eine "schwimmende" Befestigung nicht notwendig oder nicht gewünscht ist.

So kann es zum Beispiel vorgesehen sein, die Sicherungsschiene derart mit Rampenbereichen zu versehen, dass beim Verfahren der Sicherungsschiene von der Freigabe- in die Sicherungsposition die Rampen in den Bolzenschaft eingreifen und auf Grund der Neigung der Rampe der gewünschte Zwang auf den Bolzenkopf ausgeübt wird.

Weiterhin kann vorgesehen sein, dass die Bolzen einstückig mit dem Bodenelement sind. Alternativ sind separate Bolzen vorgesehen, die einen verdickten Bolzenkopf aufweisen. In diesem Fall sind im Bodenelement entsprechende Löcher eingebracht, die den Durchtritt des vollständigen Schafts des Bolzens erlauben, jedoch nicht den Durchtritt des Bolzenkopfes.

Bevorzugte Ausbildungsformen des erfindungsgemäßen Backblechs sind im Folgenden anhand von Figuren dargestellt. Es zeigen
Fig. 1 und 2: den Eckbereich eines Baguette-Backbleches in zwei verschiedenen Ansichten,
Fig. 3 und 4: den Eckbereich einer ersten Ausbildungsform eines flachen Backbleches in zwei verschiedenen Ansichten,
Fig. 5: den Eckbereich einer zweiten Ausbildungsform eines flachen Backbleches in einer Explosionsansicht,
Fig. 6: den Eckbereich einer dritten Ausbildungsform eines flachen Backbleches in einer Explosionsansicht,

Die im Folgenden dargestellten unterschiedlichen Ausbildungsbeispielen weisen eine Reihe einander entsprechender Elemente auf, die sich nicht oder lediglich in Einzelheiten voneinander unterscheiden. Derartige einander entsprechende Elemente sind in allen Figuren mit derselben arabischen Ziffer gekennzeichnet und unterscheiden sich in den Bezugszeichen allein durch einen angehängten Buchstaben.

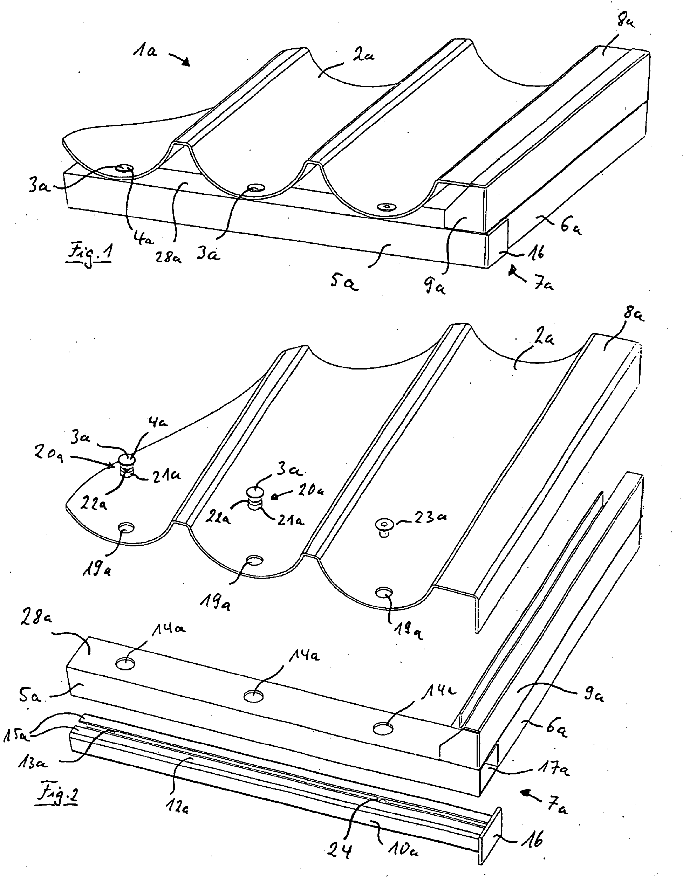

Die Fig. 1 und 2 zeigen in unterschiedlichen Ansichten einen Eckbereich eines ansonsten rechteckigen Baguette-Backbleches 1 a. Fig. 1 zeigt das Baguette-Backblech 1 a mit einem Bodenelement 2a, das zur Aufnahme von hier nicht gezeigten Baguette-Teiglingen die typische gewellte Form aufweist. Das Bodenelement 2a ist mittels Bolzen 3a (s. auch Fig. 2), von denen in Figur 1 nur die Bolzenköpfe 4a zu sehen sind, an einem ersten Rahmenstück 5a fixiert. Dieses erste Rahmenstück 5a ist z. B. durch Schweißen mit einem zweiten Rahmenstück 6a verbunden. Mit weiteren hier nicht dargestellten Rahmenstücken wird ein rechteckiger Rahmen 7a für das Baguette-Backblech 1 a gebildet. Mit den Bolzen 3a ist das Bodenelement 2a auf einer Auflagenseite 28a des ersten Rahmenstückes 5a aufgelegt. Eine entsprechende Befestigung des Bodenelements 2a befindet sich auf einem weiteren, in den Figuren nicht dargestellten zum ersten Rahmenstück 5a parallelen Rahmenstück. Die beiden anderen Seitenränder des in der Aufsicht rechteckigen Bodenelements 2a stützen sich jeweils über ein Abschlussstück 8a auf einem Seitenhaltelement 9a ab. Das Seitenhaltelement 9a ist im Wesentlichen auf dem zweiten Rahmenstück 6a fixiert. Ein entsprechendes Seitenhaltelement ist auf dem hier nicht dargestellten weiteren, zum zweiten Rahmenstück 6a parallelen Rahmenstück angeordnet. Die Seitenhaltelemente 9a verhindern ein seitliches Verschieben des Bodenelements 2a.

Fig. 2 zeigt den Eckbereich des Baguette-Backblechs 1 a gemäß Fig. 1 in einer Explosionsdarstellung. Darin sind das erste Rahmenstück 5a zu sehen sowie eine Sicherungsschiene 10a, die sich im zusammengebauten Zustand innerhalb des ersten Rahmenstückes 5a befindet. Die Sicherungsschiene 10a ist rohrförmig mit rechteckigem Profil. Auf ihrer Oberseite 12a weist die Sicherungsschiene 10a einen Sicherungsschlitz 13a auf, der sich über die gesamte Länge der Sicherungsschiene 10a erstreckt.

Um das Bodenelement 2a zu sichern, wird dieses derart auf den Rahmen 7a aufgelegt, dass im Bodenelement 2a vorgesehene Bolzenlöcher 19a mit Verbindungslöchern 14a des zugehörigen Rahmenstückes 5a fluchten. Durch die Bolzenlöcher 19a und die Verbindungslöcher 14a hindurch wird nun jeweils ein Bolzen 3a gesteckt. Der Durchmesser des Bolzenkopfes 4a ist größer als der Durchmesser des Bolzenloches 19a. Die Schäfte 20a der Bolzen 3a weisen einen verjüngten Schaftmittelbereich 22a auf. Zur Sicherung wird nunmehr bei eingesteckten Bolzen 3a die Sicherungsschiene 10a durch eine Öffnung 17a in das erste Rahmenstück 5a hinein geschoben. Die den Sicherungsschlitz 13a begrenzenden Sicherungszungen 15a des Profils der Sicherungsschiene 10a greifen beim Hineinschieben der Sicherungsschiene 10a in das erste Rahmenstück 5a in die verjüngten Schaftmittelbereiche 22a der eingesteckten Bolzen 3a ein. Ein Schaftendbereich 21 a jedes Bolzenschaftes 20a weist einen Durchmesser auf, der die lichte Weite des Sicherungsschlitzes 13a übersteigt. Damit sind die Bolzen 3a mittels des Sicherungselements 10a gegen ein Verschieben in Längsrichtung der Bolzenschäfte 20a gesichert. Damit ist auch eine Fixierung des Bodenelements 2a auf dem Rahmen 7a gewährleistet. Die Fixierung kann dabei schwimmend, d.h mit Bewegungsspielraum in der Rahmenebene, ausgestaltet sein, so dass ein Verziehen des Backbleches 1 a aufgrund einer temperaturbedingten Längenänderung des Bodenelements 2a relativ zum Rahmen 7a vermieden werden kann.

Die Sicherungsschiene 10a wird nun noch mit einer Fixierschraube 23a gegen ein unbeabsichtigtes Verfahren gesichert. Die Fixierschraube 23a greift durch ein Bolzenloch 19a des Bodenelements 2a und ein Sicherungsloch 14a des ersten Rahmenstückes 5a hindurch in das Gewinde einer Schraubenmutter 24, die an der Sicherungsschiene 10a zum Beispiel mittels Schweißen befestigt ist. Alternativ kann das Gewinde auch unmittelbar in den Sicherungsschlitz 13a eingearbeitet werden.

Zum Lösen des Bodenelements 2a ist zunächst die Fixierschraube 23a zu lösen und zu entfernen. Anschließend braucht lediglich die Sicherungsschiene 10a soweit aus dem ersten Rahmenstück 5a herausgezogen zu werden, dass sämtliche Bolzen 3a freigegeben sind.

Als Alternative können die Bolzen auch einstückig mit dem Bodenelement 2a sein, so dass aus dem Bodenelement 2a lediglich die Bolzenschäfte 20a herausragen.

Die Sicherungsschiene 10a weist eine Abschlussplatte 16 auf, mit der in der Sicherungsposition das Innere des ersten Rahmenstückes 5a abgeschlossen und somit gegen Verschmutzung geschützt ist.

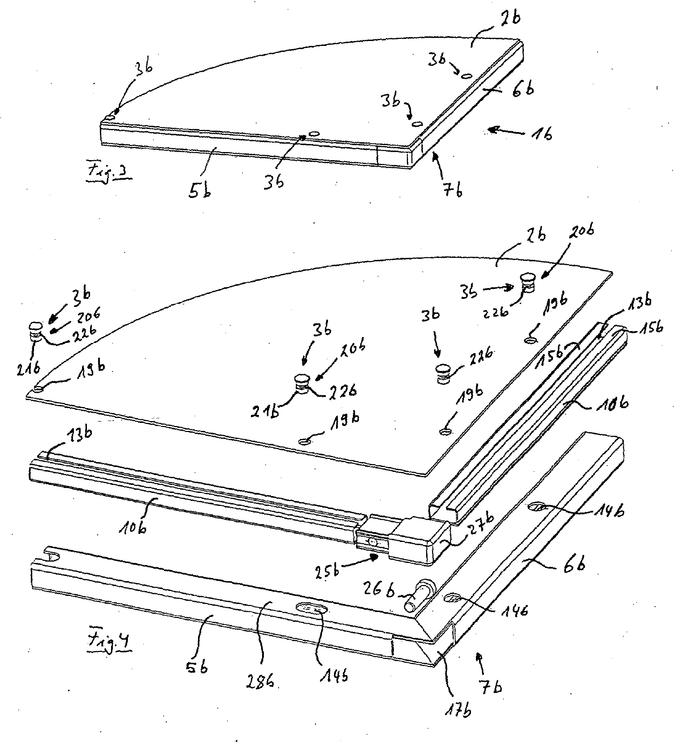

Figur 3 zeigt den Eckbereich eines Backbleches 1 b, dessen Bodenelement 2b flach ausgestaltet ist. Das Bodenelement 2b ist an einem Rahmen 7b fixiert, wobei die Fixierung mittels Bolzen 3b an einem ersten Rahmenstück 5b, einem zweiten Rahmenstück 6b als auch an den jeweils gegenüberliegenden, hier nicht dargestellten Rahmenstücken erfolgt. In der entsprechenden Explosionsdarstellung gemäß Fig. 4 wird die Art und Weise der Fixierung des Bodenelements 2b deutlich. Zunächst wird das Bodenelement 2b auf die beteiligten Rahmenstücke (in Fig. 4 sind hiervon das erste Rahmenstück 5b und das zweite Rahmenstück 6b zu sehen) aufgelegt, so dass Bolzenlöcher 19b mit Verbindungslöchern 14b der entsprechenden Rahmenstücke fluchten. Die Verbindungslöcher 14b auf der Auflageseite 28b des ersten Rahmenstückes 5b sind als Langlöcher ausgeführt, um den möglichen Fertigungstoleranzen im Bodenelement 2b zu begegnen. Anschließend werden die Bolzen 3b durch die zugehörigen Bolzenlöcher 19b und Verbindungslöcher 14b gesteckt. Die Schäfte 20b der Bolzen 3b weisen jeweils einen verjüngten Schaftmittelbereich 22b und einen demgegenüber verbreiterten Schaftendbereich 21 b auf. Der verjüngte Schaftmittelbereich 22b ragt bei eingesteckten Bolzen in das Innere des zugehörigen Rahmenstückes 5b bzw. 6b hinein. Nun wird eine erste Sicherungsschiene 11b in das zweite Rahmenstück 6b eingeschoben. Die Sicherungsschiene 11b weist einen Sicherungsschlitz 13b auf, der durch Sicherungszungen 15b begrenzt ist. Diese Sicherungszungen 15b greifen in den jeweiligen verjüngten Schaftmittelbereich 22b der im zweiten Rahmenstück 6b sitzenden Bolzen 3b und fixieren diese somit. Anschließend wird eine zweite Sicherungsschiene 10b in das erste Rahmenstück 5b in entsprechender Weise eingesteckt, so dass mittels des Sicherungsschlitzes 13b auch die damit umfassten, im ersten Rahmenstück 5b steckenden Bolzen 3b gesichert sind. Anschließend wird noch ein Fixierstück 25b durch die Rahmenöffnung 17b eingeschoben. Dieses Fixierstück 25 wird mittels eines Fixierstifts 26b, der auch als Schraube ausgebildet sein kann, durch eine in der Zeichnung nicht sichtbare Bohrung im ersten Rahmenstück 5b geführt. In der fixierten Stellung sichert das Fixierstück 25b gleichzeitig die beiden Sicherungsschienen 10b gegen eine axiale Verschiebung. Das Fixierstück 25b weist eine Abschlusskappe 27b auf, die das Innere des Rahmens 7b schützt.

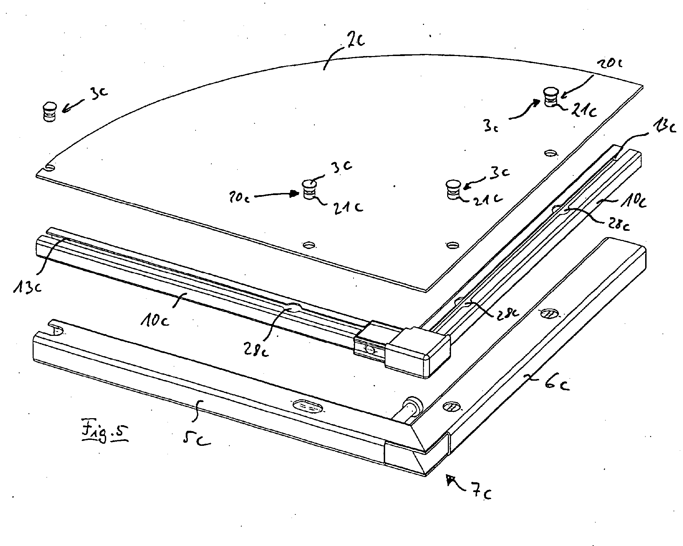

Figur 5 zeigt eine weitere Variante zur Fixierung eines Bodenelements 2c an einem Rahmen 7c mittels Bolzen 3c und Sicherungsschienen 10c. Der einzige Unterschied zu der Ausbildungsform gemäß Figur 4 besteht in den Entnahmebereichen 28c in den Sicherungsschlitzen 13c der Sicherungsschienen 10c. Der Durchmesser der als Bohrung ausgeführten Entnahmebereiche 28c übersteigt den Außendurchmesser der Schaftendbereiche 21 c der zugehörigen Bolzen 3c. Hierdurch wird erreicht, dass die jeweilige Sicherungsschiene 10c nicht fast ganz aus dem zugehörigen Rahmenstück 5c bzw. 6c gezogen werden muss, um sämtliche Bolzen 3c freizugeben. In der Sicherungsposition kann der Entnahmebereich 28c jeweils unmittelbar neben dem zugehörigen gesicherten Schaft 20c positioniert sein.

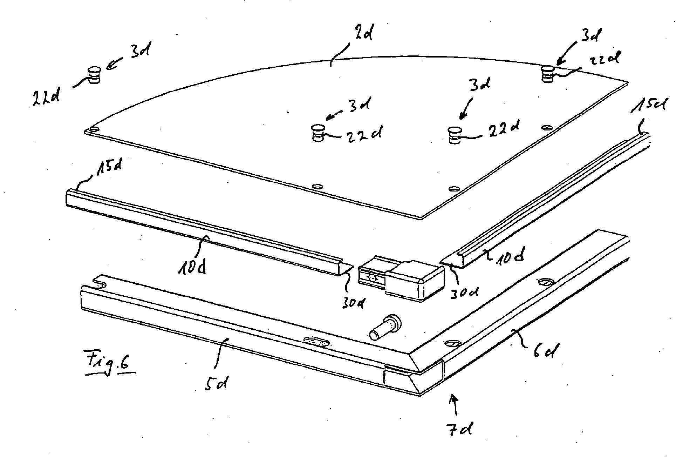

Eine weitere Variante zur Fixierung eines Bodenelements 2d auf einem Rahmenelement 7d mittels Bolzen 3c ist in Figur 6 dargestellt. Diese Variante unterscheidet sich von denen in den Figuren 4 und 5 ebenfalls lediglich durch eine andere Ausgestaltung der Sicherungsschienen 10c, die anders als in den beiden anderen Ausführungsbeispielen jeweils lediglich eine einzige Sicherungszunge 15d aufweisen. Die jeweilige Sicherungszone 15d begrenzt den hier nicht dargestellten Sicherungsschlitz nur einseitig, da dieser des Weiteren von der hier nicht sichtbaren inneren Wand des zugehörigen Rahmenstückes 5d oder 6d begrenzt wird. Im vorliegenden Beispiel werden die Bolzen 3d allein von der einzelnen, in die verjüngten Schaftmittelbereiche 22d der Bolzen 3d eingreifenden Sicherungszunge 15d gesichert. Die den Sicherungsschlitz auf der anderen Seite begrenzende Innenwand des zugehörigen Rahmenstücks 5d bzw. 6d ist für die Sicherung ohne unmittelbare Funktion. Eine Abstützzunge 30d der Sicherungsschienen 10d ist in ihrer Dimension so gewählt, dass sie ein Verkippen der Sicherungsschiene 10d innerhalb des entsprechenden Rahmenstücks 5d bzw. 6d verhindert.

Die in den Ausbildungsbeispielen dargestellten Varianten für die Ausgestaltung des Bodenelements 2, der Rahmenstücke 5 und 6 sowie der Sicherungsschiene 10 können, für den Fachmann ersichtlich, in unterschiedlichster Weise miteinander kombiniert werden.

### Bezugszeichenliste

- 1: Baguette-Blech
- 2: Bodenelement
- 3: Bolzen
- 4: Bolzenkopf
- 5: Erstes Rahmenstück
- 6: Zweites Rahmenstück
- 7: Rahmen
- 8: Abschlussstück00
- 9: Seitenhalteelement
- 10: Sicherungsschiene
- 11: (nicht belegt)
- 12: Oberseite der Sicherungsschiene
- 13: Sicherungsschlitz
- 14: Sicherungs-Verbindungsloch
- 15: Sicherungszunge
- 16: Abschlussplatte
- 17: Öffnung des ersten Rahmenstücks
- 18: (nicht belegt)
- 19: Bolzenloch
- 20: Schaft
- 21: Schaftendbereich
- 22: Schaftmittelbereich
- 23: Fixierschraube
- 24: Schraubenmutter
- 25: Fixierstück
- 26: Fixierstift
- 27: Abschlusskappe
- 28: Auflageseite des ersten Rahmenstückes
- 29: Entnahmebereich
- 30: Abstützzunge

## Patentansprüche

1. Backblech, umfassend einen Rahmen (7) und ein mit dem Rahmen (7) verbundenes Bodenelement (2), wobei
a) der Rahmen (7) mindestens ein Auflagestück (5, 6) mit jeweils mindestens zwei Verbindungslöchern (14) aufweist, in denen jeweils der Schaft (20) eines Verbindungselements (3) angeordnet ist, welches das auf dem Auflagestück (5, 6) aufliegende Bodenelement (2) mit dem Auflagestück (5, 6) verbindet und
b) die Verbindungselemente Bolzen (3) mit einem dem Bodenelement (2) abgewandten Bolzenschaft (20) sind,
**dadurch gekennzeichnet, dass**
c) mindestens eine Sicherungsschiene (10) zur Sicherung der Verbindungselemente vorgesehen ist, wobei die Sicherungsschiene (10) mindestens eine Sicherungszunge (15) aufweist, die
aa) in einer Sicherungsposition einen sich entlang mindestens zweier Bolzenschäfte (20) der Verbindungselemente ununterbrochen erstreckenden Sicherungsschlitz (13) begrenzt, und
bb) an den auf der dem Bodenelement (2) abgewandten Seite aus den Verbindungslöchern (14) herausragenden Bolzenschäften (20) angreifend den jeweiligen Bolzen (3) mittels Formschlusses sichert,
und
d)) die Sicherungsschiene (10) in eine Freigabeposition verfahrbar ist, in der die Bolzenschäfte (20) freigegeben sind.

2. Backblech nach Anspruch 1, **dadurch gekennzeichnet, dass** das Auflagestück ein rohrförmiges oder im Profil u-förmiges Rahmenstück (5, 6) ist und die mindestens eine Sicherungsschiene (10) von dem mindestens einen Rahmenstück (5, 6) umfasst ist.

3. Backblech nach Anspruch 2, **dadurch gekennzeichnet, dass** die mindestens eine Sicherungsschiene (10) in Längsrichtung des zugehörigen Rahmenstückes (5, 6) verfahrbar ist.

4. Backblech nach Anspruch 2 oder 3, **dadurch gekennzeichnet, dass** die mindestens eine Sicherungsschiene (10) im zugehörigen Rahmenstück (5, 6) geführt ist.

5. Backblech nach einem der Ansprüche 1 bis 4, **dadurch gekennzeichnet, dass** die Sicherungsschiene (10) zwei den Sicherungsschlitz (13) begrenzende Sicherungszungen (15) aufweist.

6. Backblech nach einem der Ansprüche 1 bis 5, **dadurch gekennzeichnet, dass** die lichte Weite des Sicherungsschlitzes (13) im Wesentlichen konstant ist und die Bolzenschäfte (20) jeweils einen vom Bodenelement (2) abgewandten Bolzenschaftendbereich (21) mit einem die lichte Weite des Sicherungsschlitzes (13) übersteigenden Durchmesser aufweisen.

7. Backblech nach einem der Ansprüche 1 bis 5, **dadurch gekennzeichnet, dass** die Bolzenschäfte (20) jeweils einen vom Bodenelement (2) abgewandten Bolzenschaftendbereich (21) aufweisen und der Sicherungsschlitz (13) abwechselnd Entnahmebereiche (29) mit einer den Durchmesser des zugehörigen Bolzenschaftendbereichs (21) übersteigenden lichten Weite und Sicherungsbereiche mit einer den Durchmesser des zugehörigen Bolzenschaftendbereichs (21) unterschreitenden lichten Weite aufweist.

8. Backblech nach einem der Ansprüche 1 bis 7, **dadurch gekennzeichnet, dass** der Eingriff der mindestens einen Sicherungsschiene (10) in die Bolzenschäfte (20) derart ausgestaltet ist, dass aufgrund des Verfahrens des Sicherungselements (10) von der Freigabeposition in die Sicherungsposition die Bolzenköpfe (4) in Richtung auf das Auflagestück (5, 6) hin gezogen werden.

9. Backblech nach einem der Ansprüche 1 bis 8, **dadurch gekennzeichnet, dass** die Bolzen (3) einstückig mit dem Bodenelement (2) sind.

## Claims

1. Baking tray comprising a frame (7) and a base element (2) connected to the frame (7), wherein
a) the frame (7) has at least one supporting piece (5, 6) having in each case at least two connecting holes (14) in which is arranged in each case the shank (20) of a connecting element (3) by means of which the base element (2), which is supported on the supporting piece (5, 6), is connected to the supporting piece (5, 6), and
b) the connecting elements are bolts (3) having a shank (20) facing away from the base element (2), **characterized in that**
c) at least one securing rail (10) is provided for securing the connecting elements, wherein the securing rail (10) has at least one securing tongue (15), the securing tongue (15) aa) in a securing position limits a securing slot (13) continuously extending along at least two bolt shanks (20) of the connecting elements and bb) acting on the bolt shanks (20), these protruding from the connecting holes (14) on the side facing away from the base element (2), secures the respective bolt (3) by means of a form fit,
and
d) the securing rail (10) can be moved into a release position in which the bolt shanks (20) are released.

2. Baking tray according to Claim 1, **characterized in that** the supporting piece is a frame piece (5, 6) which is tubular or has a u-shaped profile and the at least one securing rail (10) is surrounded by the at least one frame piece (5, 6).

3. Baking tray according to Claim 2, **characterized in that** the at least one securing rail (10) can be moved in the longitudinal direction of the associated frame piece (5, 6).

4. Baking tray according to Claim 2 or 3, **characterized in that** the at least one securing rail (10) is guided in the associated frame piece (5, 6).

5. Baking tray according to one of the claims 1 to 4, **characterized in that** the securing rail (10) has two securing tongues (15) limiting the securing slot (13).

6. Baking tray according to one of the Claims 1 to 5, **characterized in that** the clear width of the securing slot (13) is essentially constant and that the bolt shanks (20) have a respective end region (21) facing away from the base element (2) and having a diameter exceeding the clear width of the securing slot (13).

7. Baking tray according to one of the Claims 1 to 5, **characterized in that** the bolt shanks (20) have a respective bolt shank end region (21) facing away from the base element (2) and that the securing slot (13) has alternating removal areas (29) and securing areas, the removal areas (29) having a clear width extending the diameter of the associated bolt shank end region (21) and the securing areas having a clear width falling below the diameter of the associated bolt shank end region (21).

8. Baking tray according to one of Claims 1 to 7, **characterized in that** the at least one securing rail (10) engages in the bolt shanks (20) in such a way that, as a result of the securing rail (10) moving from the release position into the securing position, the bolt heads (4) are pulled in the direction of the supporting piece (5, 6).

9. Baking tray according to one of Claims 1 to 8, **characterized in that** the bolts (3) are integral with the base element (2).

## Revendications

1. Plateau de cuisson, comprenant un cadre (7) et un élément plancher (2) relié au cadre (7) ;
a) le cadre (7) comportant au moins une pièce d'appui (5, 6) présentant respectivement au moins deux trous de jonction (14) dans lesquels est disposée respectivement la tige (20) d'un élément de jonction (3) qui relie l'élément plancher (2) reposant sur la pièce d'appui (5) à la pièce d'appui (5, 6) ; et
b) les éléments de jonction étant des boulons (3) avec une tige de boulon (20) opposée à l'élément plancher (2) ;
**caractérisé en ce que** :
c) au moins un rail de fixation (10) pour la fixation des éléments de jonction est prévu,le rail de fixation (10) comportant au moins une languette de fixation (15), qui
aa) dans une position de fixation borne une fente de fixation (13), s' étendant de façon continue le long au moins des deux tiges de boulon (20) des élément de jonction, et
bb) fixe le boulon (3) respectif par complémentarité de forme en emboîtant les tiges de boulon (20) ressortant des trous de jonction (14) au côté opposé à l'élément de plancher (2),
et
d) le rail de fixation (10) pouvant être déplacé dans une position de libération dans laquelle les tiges de boulon (20) sont libérées.

2. Plateau de cuisson selon la revendication 1, **caractérisé en ce que** la pièce d'appui est une pièce de cadre (5, 6) de forme tubulaire ou présente un profil en U et l'au moins un rail de fixation (10) est composé de l'au moins une pièce de cadre (5, 6).

3. Plateau de cuisson selon la revendication 2, **caractérisé en ce que** l'au moins un rail de fixation (10) peut être déplacé dans la direction longitudinale de la pièce de cadre (5, 6) associée.

4. Plateau de cuisson selon la revendication 2 ou 3, **caractérisé en ce que** l'au moins un rail de fixation (10) est guidé dans la pièce de cadre (5, 6) associée.

5. Plateau de cuisson selon l'une quelconque des revendications 1 à 4, **caractérisé en ce que** le rail de fixation (10) comporte deux languettes de fixation (15) bornant la fente de fixation (13).

6. Plateau de cuisson selon l'une quelconque des revendications 1 à 5, **caractérisé en ce que** la largeur intérieure de la fente de fixation (13) est essentiellement constante et les tiges de boulon (20) comportent respectivement une zone d'extrémité de tige de boulon (21) opposée à l'élément plancher (2) avec un diamètre dépassant la largeur intérieure de la fente de fixation (13) associée.

7. Plateau de cuisson selon l'une quelconque des revendications 1 à 5, **caractérisé en ce que** les tiges de boulon (20) comportent respectivement une zone d'extrémité de tige de boulon (21) opposée à l'élément plancher (2) et la fente de fixation (13) comporte alternant des zones de reprise (29) et des zones de fixation, les zones de reprise (29) ayant une largeur intérieur dépassant le diamètre de la zone d'extrémité de tige de boulon (21) correspondante et les zones de fixation ayant une largeur intérieur restant inférieur au diamètre de la zone d'extrémité de tige de boulon (21) correspondante.

8. Plateau de cuisson selon l'une quelconque des revendications 1 à 7, **caractérisé en ce que** l'emboîtement de l'au moins un rail de fixation (10) dans les tiges de boulon (20) est conçu de telle sorte que du fait du déplacement de l'élément de fixation (10) de la position de libération dans la position de fixation, les têtes de boulon (4) sont tirées en direction de la pièce d'appui (5).

9. Plateau de cuisson selon l'une quelconque des revendications 1 à 8, **caractérisé en ce que** les boulons (3) sont réalisés d'un seul tenant avec l'élément plancher (2).
